(19) Europäisches Patentamt / European Patent Office / Office européen des brevets

(11) **EP 2 194 468 A1**

(12) **EUROPEAN PATENT APPLICATION**

(43) Date of publication:
**09.06.2010 Bulletin 2010/23**

(51) Int Cl.:
*G06F 17/30* (2006.01)　　*G06Q 30/00* (2006.01)
*G06F 3/048* (2006.01)　　*G09G 5/00* (2006.01)

(21) Application number: **09171851.0**

(22) Date of filing: **30.09.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **04.12.2008 KR 20080122622**

(71) Applicant: **Samsung Electronics Co., Ltd.
Suwon-si,
Gyeonggi-do 442-742 (KR)**

(72) Inventors:
• **Ryu, Hee-seob
Gyeonggi-do (KR)**
• **Choi, Sang-on
Gyeonggi-do (KR)**
• **Lee, Sung-jin
Gyeonggi-do (KR)**
• **Jung, Min-woo
Seoul (KR)**

(74) Representative: **Van Someren, Petronella F. H. M.
Arnold & Siedsma
Sweelinckplein 1
2517 GK Den Haag (NL)**

(54) **Electronic apparatus and displaying method thereof**

(57)　An electronic apparatus and a displaying method thereof are provided. The electronic apparatus includes a sensor which senses user information, and a controller which reads out item information based on the sensed user information, determines a display method of item content corresponding to the read-out item information, and controls the item content to be displayed in the determined display method. Accordingly, actual goods are displayed along with information regarding the actual goods so that the user can realize a displayed image as actual goods and can easily obtain goods information.

# FIG. 2

# Description

## CROSS-REFERENCE TO RELATED APPLICATIONS

This application claims priority from Korean Patent Application No. 10-2008-0122622, filed on December 4, 2008, in the Korean Intellectual Property Office, the disclosure of which is incorporated herein by reference in its entirety.

## BACKGROUND OF THE INVENTION

Field of the Invention

Apparatuses and methods consistent with the present invention relate to an electronic apparatus and a displaying method thereof, and more particularly, to an electronic apparatus which controls content to be displayed on a transparent display apparatus based on user's motion and a displaying method thereof.

Description of the Related Art

If an electronic apparatus has information to display, the electronic apparatus generally generates an image for the information, adds a background image to the generated image, and displays the image on a display apparatus. The electronic apparatus refers to an apparatus that displays an image signal on a display apparatus, such as a personal computer, a laptop computer, and a work station.

However, in order to exhibit actual goods, a conventional electronic apparatus generates a virtual image regarding the actual goods and displays the virtual image. Therefore, a user may not realize the displayed image as actual goods. Also, a great error between the displayed image and the actual goods may occur, causing user dissatisfaction.

Therefore, there is a demand for a method of displaying actual goods as well as goods information.

## SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

Exemplary embodiments of the present invention provide an electronic apparatus which controls actual goods and goods information to be displayed based on user's position and gaze direction and a displaying method thereof.

Consistent with an aspect of the present invention, an electronic apparatus comprises a sensor which senses user information, and a controller which reads out item information based on the sensed user information, determines a display method of item content corresponding to the read-out item information, and controls the item content to be displayed in the determined display method.

The controller may read out the item information indicating an item which is gazed at by a user based on at least one of position information, gaze information and height information of the user. The user information may include at least one of the position information of the user, identifier information indicating whether the user exists or not, the gaze information of the user, and the height information of the user.

The electronic apparatus may further comprise a storage unit which stores the item information corresponding to the user information. The item information may include at least one of an exterior of the item, a model name of the item, and position information of the item.

The controller may read out a model name of the item corresponding to the sensed user information from the storage unit and control the item content corresponding to the read-out model name of the item to be displayed in a display method determined based on the user information.

The item content may include at least one of basic information, detailed information, color, and size of an item.

The display method may include at least one of a display position of the item content, a color change of the item content, a size change of the item content, and a display font change of the basic information and the detailed information.

If it is determined that a position of the user changes based on the sensed user information, the controller may change the display position of the item content displayed on a display apparatus.

The electronic apparatus may further comprise an interface which receives a command to change the display method of the item content.

If the command is received through the interface, the controller may determine a display method of the item content based on the user information and controls the item content to be displayed in the determined display method.

If the command is received through the interface, the controller may determine a display method of the item content based on at least one of position information, gaze information, and height information of the user.

The sensor may comprise a reader which reads out a tag attached to an item in a non-contact manner. The controller may read out the item information based on the user information sensed by the sensor and information recorded in the tag read out by the reader.

The controller may read out position information of the item based on the result of reading out the tag by the reader and determine a display method of the item content corresponding to the position information of the item.

Consistent with another aspect of the present invention, a displaying method comprises sensing user information, and reading out item information based on the sensed user information, determining a display method of item content corresponding to the read-out item information, and controlling the item content to be displayed in the determined display method.

The controlling operation may read out the item information indicating an item which is gazed at by the user based on at least one of position information, gaze information and height information of the user, and the user information may include at least one of the position information of the user, identifier information indicating whether a user exists or not, the gaze information of the user, and the height information of the user.

The item information may include at least one of an exterior, a model name, and position information of an item. The controlling operation may read out a model name of the item which is pre-stored to correspond to the sensed user information and control the item content corresponding to the read-out model name of the item to be displayed in a display method determined based on the user information.

The item content may include at least one of basic information, detailed information, color, and size of an item.

The display method may include a display position of the item content, a color change of the item content, and a size change of the item content, and a display font change of the basic information and the detailed information.

If it is determined that a position of the user changes based on the sensed user information, the controlling operation may change the display position of the item content displayed on a display apparatus.

The displaying method may further comprise receiving a command to change a display method of the item content. If a command to change the display method is received, the controlling operation may determine a display method of the item content based on the user information and controls the item content to be displayed in the determined display method.

If a command to change the display method is received, the controlling operation may determine a display method of the item content based on at least one of position information, gaze information, and height information of the user.

The sensing operation may comprise reading out a tag attached to an item in a non-contact manner. The controlling operation may read out the item information based on the sensed user information and information recorded on the read-out tag.

The controlling operation may read out position information of the item based on the result of reading out the tag and determine a display method of the item content corresponding to the read-out position information of the item.

Consistent with still another aspect of the present invention, a display system comprises a sensor which senses user information, an electronic apparatus which senses item information based on the user information sensed by the sensor and determines a display method of item content corresponding to the sensed item information, and a display apparatus which displays the item content in the display method determined by the electronic apparatus.

The display apparatus may be realized with an organic light-emitting diode.

The item content may include at least one of basic information, detailed information, color, and size of the item.

The display method may include at least one of a display position of the item content, a color change of the item content, and a size change of the item content, and a display font change of the basic information and the detailed information.

Additional and/or other aspects of the invention will be set forth in part in the description which follows and, in part, will be obvious from the description, or may be learned by practice of the invention.

## BRIEF DESCRIPTION OF THE DRAWING FIGURES

The above and/or other aspects of the present invention will be more apparent by describing certain exemplary embodiments of the present invention with reference to the accompanying drawings, in which:

FIG. 1 is a block diagram illustrating a display system consistent with an exemplary embodiment of the present invention;

FIG. 2 is a block diagram illustrating an electronic apparatus according to an exemplary embodiment of the present invention;

FIG. 3 is a view illustrating a method for the electronic apparatus to determine which content is being gazed at by a user according to an exemplary embodiment of the present invention;

FIG. 4 is a view illustrating a display position of content on the electronic apparatus according to an exemplary embodiment of the present invention; and

FIG. 5 is a flowchart illustrating a method for operating the electronic apparatus according to an exemplary embodiment of the present invention.

## DETAILED DESCRIPTION OF THE EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

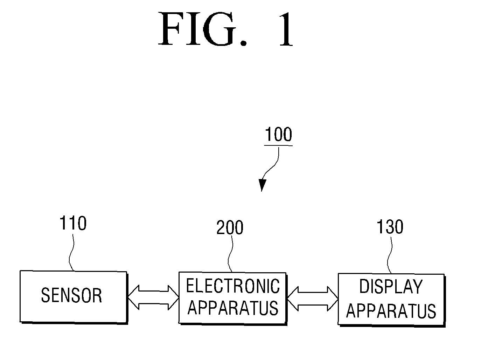

FIG. 1 is a block diagram illustrating a display system according to an exemplary embodiment of the present invention. For the convenience of explanation, actual goods are referred to as "item" hereinbelow.

Referring to FIG. 1, a display system according to an exemplary embodiment of the present invention comprises a sensor 110, an electronic apparatus 200, and a display apparatus 130.

The sensor 110 has a microphone (not shown) and an infrared ray (IR) camera (not shown) mounted therein and is mounted in the display apparatus 130. For example, the sensor 110 is a light sensor which detects the brightness of a predetermined area in which the light sensor is mounted.

The sensor 110 transmits sensed information to the electronic apparatus 200 in a wired or wireless manner. The sensed information includes at least one of video data, audio data, and brightness data. The video data is sensed by the IR camera (not shown), the audio data is sensed by the microphone (not shown), and the brightness data indicates the brightness of a predetermined area that can be sensed by the sensor 110. If a touch sensor (not shown) is mounted in the display apparatus 130, the sensed information further includes a coordinate value of the position touched through the touch sensor (not shown).

The electronic apparatus 200 generates user information using the sensed information transmitted from the sensor 110 and determines which item is being gazed at by the user based on the user information to determine a display method of item content.

Herein, the item content includes at least one of basic information, detailed information, color and size of the item. The user information includes at least one of identifier information indicating the presence/absence of the user, position information of the user, gaze information of the user, and height information of the user.

If a command to change the display method of the item content is received from a manipulator (not shown) provided on the display apparatus 130 by user manipulation, the electronic apparatus 200 determines a display method of the item content and displays the item content on the display apparatus 130 according to the determined display method.

Although the sensed information is obtained through the sensor 110, the sensor 110 is merely an example of a sensing device to obtain sensed information and may further comprise a RFID to read out a tag attached to the item. Accordingly, the sensing device (not shown) may read out the tag attached to the item every predetermined hour, and a controller 230 reads out position information of the item based on the result of reading out the tag and the user information to determine the display method of the item content.

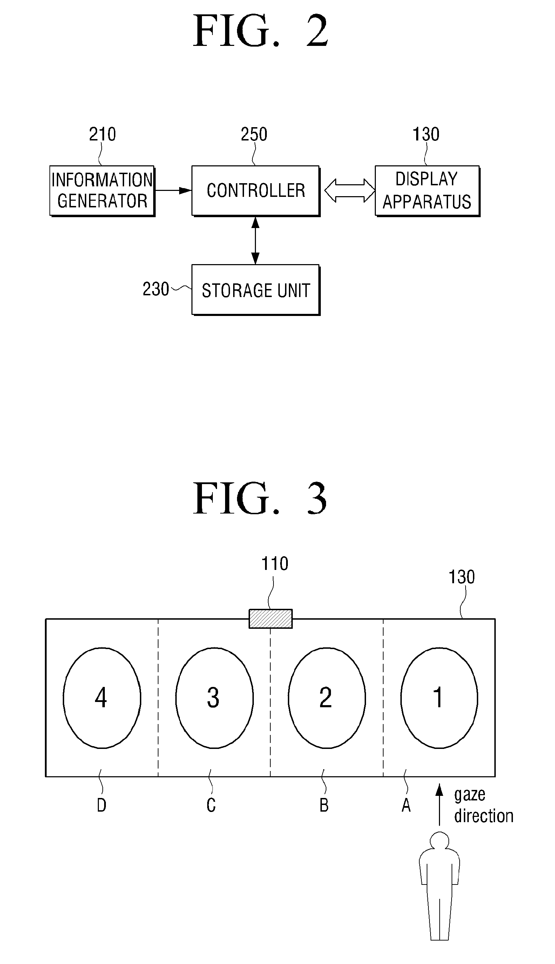

Hereinafter, operations of generating user information, reading out item information based on the user information, and determining a display method of the item content corresponding to the read-out item information in the electronic apparatus 200 will be described in detail with reference to FIG. 2.

The item information includes an exterior of an item, a model name of the item, position information of the item, and a gaze range. The electronic apparatus 200 reads out the item information based on the user information to determine which item is being gazed at by the user.

FIG. 2 is a block diagram illustrating the electronic apparatus according to an exemplary embodiment of the present invention. Referring to FIG. 2, the electronic apparatus 200 comprises an information generator 210, a controller 250, a storage unit 230, and an interface 270.

The information generator 210 generates user information based on video data included in the sensed information received from the sensor 110.

More specifically, the information generator 210 analyzes video data using a computer vision-based human detecting algorithm and determines whether video includes a user or not, and sets to indicate the presence/absence of the user in the identifier information according to the result of determination. For example, the information generator 210 sets identifier information to be '1' if the video includes a user and sets identifier information to be '0' if the video does not include a user.

The computer vision-based user detecting algorithm includes a color-based detecting algorithm and a contour-based detecting algorithm and these algorithms are well known and thus detailed description is omitted.

If the video includes a user, the information generator 210 detects the position of the user from the display apparatus 130 using the received video data. The position of the user may be detected using the positions of the pixels included in the video data and the size of the display apparatus 130. This method is well known to the ordinary skilled person in the related art and thus detailed description is omitted.

If the video includes a user, the information generator 210 detects a gaze direction of the user using the received video data and generates gaze information. The gaze direction is detected using a gaze tracking algorithm, and the gaze tracking algorithm is a well known method and thus detailed description is omitted.

If the video includes a user, the information generator 210 generates eight information of the user by calculating the height of the user using the received video data. The height of the user is detected using the computer-vision based user detecting algorithm, and this method is well known to the ordinary skilled person in the related art and thus detailed description is omitted.

The storage unit 230 stores item information corresponding to each of the plurality of items, basic information of the item, and detailed information of the item as a database. The basic information of the item includes at least one of price-off information, price, inventories, and color type of the item. The detailed information includes at least one of the country of origin, fabric and manufacturing company of the item in addition to the basic information of the item.

The controller 250 reads out the item information from the storage unit 230 based on the user information received from the information generator 210, and determines a display method of the item content based on the item information.

More specifically, the controller 250 reads out the position information of the item and the model name of the item, which correspond to the position information of the user and the gaze information of the user input from the information generator 210, from the storage unit 230, and determines the display position of the item content based on the position information of the item and the position information of the user. At this time, the controller 250 controls the display apparatus 130 to display the basic information of the item corresponding to the model name of the item on the determined display position.

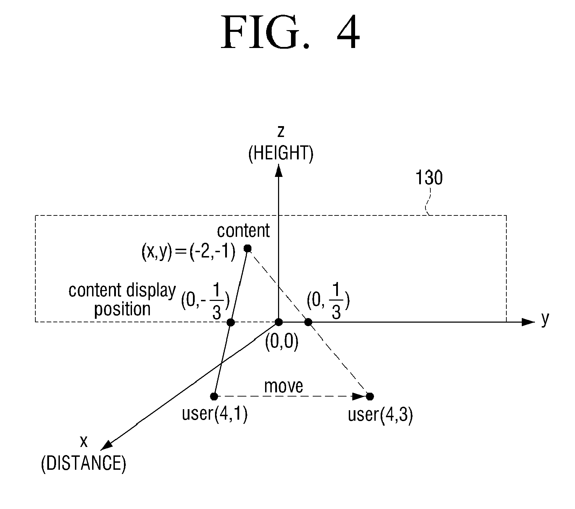

Hereinafter, the operation of determining the display position of the item content will be described in detail with reference to FIGS. 3 and 4.

Referring to FIG. 3, if a user gazes at item 1 in the area A among four items for example, the controller 250 determines which position range among first to fourth position ranges (A-D) includes a position value of the user and determines which gaze range among first to fourth gaze ranges include a gaze direction value of the user, and reads out a model name and location information of the item corresponding to the item gazed at by the user from the storage unit 230.

The controller 250 determines a display position of the item content based on the position coordinates of the user and the position coordinates of the item as shown in FIG. 4, and displays the item content on the determined display position. In FIG. 4, the axis 'x' denotes a distance between the user and the display apparatus 130, the axis "y" denotes a position on which the display apparatus 130 is mounted, and the axis "z" denotes the height of the display apparatus 130.

If a command to change color of the item is received, the controller 250 reads out from the storage unit 230 an exterior of the item corresponding to the position information of the user and the gaze direction information of the user received from the information generator 210. The controller 250 adds the color included in the command to the exterior of the item and controls the display apparatus 130 to display the item content the color of which has been changed.

The controller 250 displays the basic information of the item if a command to display detailed information is not received from the manipulator (not shown) of the display apparatus 130, and displays the detailed information of the item on the display apparatus 130 if the command to display detailed information is received.

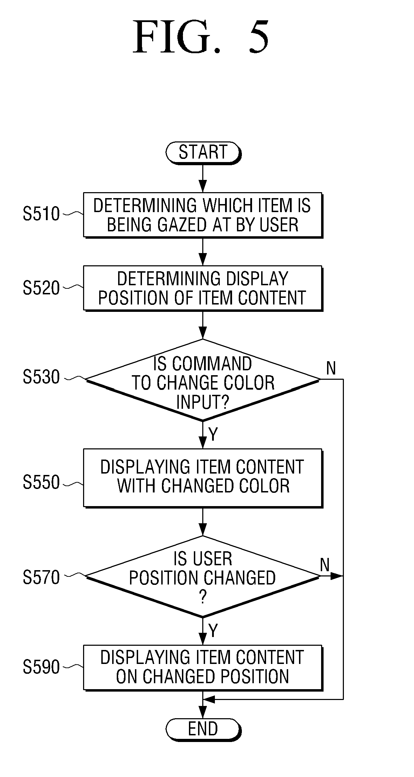

If the position of the user changes, the controller 250 re-determines a display position of the item content using the position coordinates of the item and the position coordinates of the user, and displays the item content on the re-determined position. The operation of changing the display position of the item content according to the change in the user's position will be described with reference to FIG. 5.

FIG. 5 is a flowchart illustrating a method for operating the electronic apparatus according to an exemplary embodiment of the present invention.

Referring to FIG. 5, the controller 250 determines which item is being gazed at by the user using a position value of the user and a gaze direction value of the user which are received from the information generator 210(S510).

More specifically, the controller 250 reads out from the storage unit 230 position information of the item and a model name of the item corresponding to the position information of the user and the gaze information of the user input from the information generator 210, and extracts the model name of the item corresponding to the read-out position information of the item and the position information of the user and determines which item is being gazed at by the user.

The controller 250 determines a display position of the item content based on a position coordinate value of the user and a position coordinate value of the item (S520).

More specifically, if the position coordinates of the user are (4, 1) and the coordinates of the item read out from the storage unit 230 are (-2, - 1) as shown in FIG. 4, the controller 250 substitutes the coordinates values for the variables in the linear polynomial y=ax+b,

thereby calculating $y = \dfrac{1}{3}x + \dfrac{1}{3}$ and also calculates

$y = -\dfrac{1}{3}$ in the case of x=0, so that the display position of the item content is determined. That is, the display position of the item content is (0, -1/3). The displayed item content indicates basic information of the item which is being gazed at by the user.

If a command to change the color of the item is received (S530:Y), the controller 250 displays the item content the color of which has been changed using the position information of the user and the gaze information of the user (S550).

More specifically, the controller 250 reads out the exterior of the item corresponding to the position information of the user and the gaze information of the user from the storage unit 230, and generates the item content in which the color included in the command is added to the exterior of the item. The controller 250 determines a display position of the item content in the same method as in operation S520 and displays the item content on the determined display position. Herein, the displayed item content is an item the color of which has been changed.

Likewise, the controller 250 determines a display position of basic information of the item the color of which has been changed in the same method as in operation S520 and controls the display apparatus 130 to display the basic information of the item the color of which has been changed on the determined position.

If the position of the user changes (S570:Y), the controller 250 determines a display position of the item content based on the changed position coordinate value of the user and the position coordinate value of the item and displays the item content on the determined display position.

For example, if the position coordinates of the user changes from (4, 1) to (4, 3) as shown in FIG. 4, the controller 250 reads out the position coordinates of the item (-2, -1) corresponding to the position coordinates of the user (4, 1) from the storage unit 230, and determines the display position of the item contents to be (0, 1/3) based on the read-out position coordinates of the item (-2, -1) and the changed position coordinates of the user (4, 3) in the same method as in the operation S520.

In the electronic apparatus 200 and the displaying method thereof according to an exemplary embodiment of the present invention, if a command to display detailed information is input from the display apparatus 130 during the operations S510 to S590, the controller 250 reads out the detailed information of the item corresponding to the user position information and the user gaze information from the storage unit 230 and displays the detailed information on the display apparatus 130. That is, if the command to display the detailed information is received, the controller 250 controls the display apparatus 130 to display detailed information corresponding to the item selected by the user or the item gazed at by the user.

According to an exemplary embodiment of the present invention, the information generator 210 may detect a moving speed of the user and a moving direction of the user from the video data received from the sensor 110 using a motion detecting algorithm, and the controller 250 may output basic information or detailed information of the item using the moving speed and the moving direction through a speaker (not shown) provided on the display apparatus 130

That is, if the moving speed is below a pre-set speed and the moving direction belongs to a pre-set direction range, the controller 250 generates an audio signal corresponding to the basic information or the detailed information of the item which is being gazed at by the user and outputs the audio signal through the speaker (not shown).

Also, in the electronic apparatus 200 and the displaying method thereof according to an exemplary embodiment of the present invention, the display apparatus 130 may be a transparent display apparatus using a transparent organic light-emitting diode (OLED).

Also, in the electronic apparatus 200 and the displaying method thereof according to an exemplary embodiment of the present invention, the position range and the gaze direction range may be pre-set by dividing the display apparatus 130 into a plurality of areas and may be pre-stored. That is, as shown in FIG. 3, the position range and the gaze direction divided into the areas A to D may be pre-set and pre-stored.

As described above, in the electronic apparatus 200 and the displaying method thereof according to an exemplary embodiment of the present invention, the display method of the item content displays the item content which has been changed according to the change in the display position of the item content and the change in the color of the item content. However, this should not be considered as limiting. The display method may further reflect the change in the size of the item content and the change in the display font of the basic information and the detailed information.

That is, the controller 250 may display the changed size of the item content and the changed display font of the basic information and the detailed information of the item.

According to an exemplary embodiment of the present invention, the display apparatus 130 may receive a command to change color and a command to display detailed information as a user manipulation command input through the manipulator (not shown) implemented as a touch sensor, a manipulation key pad, a mouse, and a touch screen.

Also, the display apparatus 130 according to an exemplary embodiment of the present invention may be a show window type display apparatus. In this case, if the entire display apparatus 130 has a transparency, the user can see the actual object of the item, and if a part of the display apparatus 130 has a transparency, the display apparatus 130 shows the actual object of the item and displays a virtual image corresponding to the item information. Also, a virtual image corresponding to the actual object of the item may be displayed.

Although the sensing device obtains sensed information in the above, this is merely an example. Since the information generator 210 generates user information based on the sensed information, the sensed information includes the user information and accordingly the sensing device can detect user information.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. An electronic apparatus comprising:

   a sensor which senses user information; and
   a controller which reads out item information based on the sensed user information, determines a display method of item content corresponding to the read-out item information, and controls the item content to be displayed in the determined display method.

2. The electronic apparatus as claimed in claim 1, wherein the user information includes at least one of position information of the a user, identifier information indicating whether the user exists or not, gaze information of the user, and height information of the user, and
   wherein the controller reads out the item information indicating an item which is being gazed at by a user, based on at least one of the position information, the gaze information and the height information of the user.

3. The electronic apparatus as claimed in claim 1, further comprising a storage unit which stores the item information corresponding to the sensed user information,
   wherein the item information includes at least one of an exterior of an item, a model name of the item, and position information of the item,
   wherein the controller reads out the model name of the item corresponding to the sensed user information from the storage unit and controls the item content corresponding to the read-out model name of the item to be displayed in the determined display method.

4. The electronic apparatus as claimed in claim 1, wherein the item content includes at least one of basic information, detailed information, color, and size of an item,
   wherein the display method includes at least one of a display position of the item content, a color change of the item content, a size change of the item content, and a display font change of the basic information and the detailed information.

5. The electronic apparatus as claimed in claim 1, wherein, if it is determined that a position of a user changes based on the sensed user information, the controller changes a display position of the item content displayed on a display apparatus.

6. The electronic apparatus as claimed in claim 1, further comprising an interface which is operable to receive a command to change the determined display method of the item content,
   wherein, if the command is received through the interface, the controller changes the determined display method of the item content based on the user information and controls the item content to be displayed in the changed display method.

7. The electronic apparatus as claimed in claim 6, wherein, if the command is received through the interface, the controller changes the determined display method of the item content based on at least one of position information, gaze information, and height information of the user.

8. The electronic apparatus as claimed in claim 1, wherein the sensor comprises a reader which reads out a tag attached to an item in a non-contact manner,
   wherein the controller reads out the item information based on the sensed user information and information recorded in the tag read out by the reader.

9. The electronic apparatus as claimed in claim 8, wherein the controller reads out position information of the item based on a result of reading out the tag by the reader and determines the display method of the item content corresponding to the position information of the item.

10. A displaying method comprising:

    sensing user information; and
    reading out item information based on the sensed user information, determining a display method of item content corresponding to the read-out item information, and controlling the item content to be displayed in the determined display method.

11. The displaying method as claimed in claim 10, further comprising determining whether a command to change a display method of the item content is received,
    wherein, if the command to change the display method is received, the controlling operation changes the determined display method of the item content based on the user information and controls the item content to be displayed in the changed display method.

12. The displaying method as claimed in claim 10, wherein the sensing operation comprises reading out a tag attached to an item in a non-contact manner,
    wherein the controlling operation reads out the item information based on the sensed user information and information recorded on the read-out tag.

**13.** A display system comprising:

a sensor which senses user information;
an electronic apparatus which senses item information based on the sensed user information and determines a display method of item content corresponding to the sensed item information; and
a display apparatus which displays the item content in the display method determined by the electronic apparatus.

**14.** The display system as claimed in claim 13, wherein the display apparatus comprises an organic light-emitting diode-type display.

**15.** The display system as claimed in claim 13, wherein the item content includes at least one of basic information, detailed information, color, and size of the item,
wherein the display method includes at least one of a display position of the item content, a color change of the item content, and a size change of the item content, and a display font change of the basic information and the detailed information.

# FIG. 1

100

110        200        130

| SENSOR | ⟷ | ELECTRONIC APPARATUS | ⟷ | DISPLAY APPARATUS |

# FIG. 2

```
  210              250                130
INFORMATION  →  CONTROLLER  ⟷  DISPLAY
GENERATOR                       APPARATUS

                     ↕

230─  STORAGE UNIT
```

# FIG. 3

```
              110                    130

    ┌────────┬────────┬────────┬────────┐
    │        ┊        ┊        ┊        │
    │  ⬭4   ┊  ⬭3   ┊  ⬭2   ┊  ⬭1   │
    │        ┊        ┊        ┊        │
    └────────┴────────┴────────┴────────┘
         D        C        B        A
                                      ↑ gaze
                                        direction
```

# FIG. 4

# FIG. 5

```
                        ( START )
                            │
                            ▼
S510 ─  ┌─────────────────────────────┐
        │  DETERMINING WHICH ITEM IS  │
        │   BEING GAZED AT BY USER    │
        └─────────────────────────────┘
                            │
                            ▼
S520 ─  ┌─────────────────────────────┐
        │     DETERMINING DISPLAY     │
        │  POSITION OF ITEM CONTENT   │
        └─────────────────────────────┘
                            │
                            ▼
                      ╱IS COMMAND╲           N
S530 ─           ╱ TO CHANGE COLOR ╲─────────────┐
                 ╲      INPUT?      ╱             │
                      ╲          ╱                │
                            │ Y                   │
                            ▼                     │
S550 ─  ┌─────────────────────────────┐          │
        │   DISPLAYING ITEM CONTENT   │          │
        │     WITH CHANGED COLOR      │          │
        └─────────────────────────────┘          │
                            │                     │
                            ▼                     │
                      ╱  IS USER  ╲          N    │
S570 ─           ╱ POSITION CHANGED ╲─────────────┤
                 ╲        ?         ╱             │
                      ╲          ╱                │
                            │ Y                   │
                            ▼                     │
S590 ─  ┌─────────────────────────────┐          │
        │   DISPLAYING ITEM CONTENT   │          │
        │    ON CHANGED POSITION      │          │
        └─────────────────────────────┘          │
                            │                     │
                            ▼◄────────────────────┘
                        ( END )
```

Europäisches
Patentamt

European
Patent Office

Office européen
des brevets

# EUROPEAN SEARCH REPORT

Application Number

EP 09 17 1851

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 841 195 A1 (IPF INC [US]) 3 October 2007 (2007-10-03) | 1,3-4,8 | INV. G06F17/30 G06Q30/00 G06F3/048 G09G5/00 |
| Y | * paragraphs [0253], [0272]; figures 3a2,3a19c * * paragraph [0479] - paragraph [0481] * * paragraph [0446]; figure 3a5 * * figures 4m1,4m2 * ----- | 2,5-7, 9-15 | |
| Y | US 2003/142135 A1 (HORI TETSUYA [JP] ET AL) 31 July 2003 (2003-07-31) * claims 3,4; figures 14,15 * ----- | 2,5-7, 9-15 | |
| A | EP 1 615 202 A2 (MICROSOFT CORP [US]) 11 January 2006 (2006-01-11) * figure 6 * ----- | 1-15 | |

TECHNICAL FIELDS
SEARCHED      (IPC)

G06F
G06Q
G09G

The present search report has been drawn up for all claims

| Place of search | Date of completion of the search | Examiner |
|---|---|---|
| The Hague | 4 November 2009 | Le Chapelain, B |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.**                    EP 09 17 1851

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2009

| Patent document cited in search report | | Publication date | Patent family member(s) | | Publication date |
|---|---|---|---|---|---|
| EP 1841195 | A1 | 03-10-2007 | NONE | | |
| US 2003142135 | A1 | 31-07-2003 | JP | 2003223254 A | 08-08-2003 |
| EP 1615202 | A2 | 11-01-2006 | AU | 2005202774 A1 | 02-02-2006 |
| | | | BR | PI0502581 A | 21-02-2006 |
| | | | CA | 2511448 A1 | 08-01-2006 |
| | | | CN | 1719399 A | 11-01-2006 |
| | | | JP | 2006072323 A | 16-03-2006 |
| | | | KR | 20060049938 A | 19-05-2006 |
| | | | MX | PA05007454 A | 22-02-2006 |
| | | | US | 2006290714 A1 | 28-12-2006 |
| | | | US | 2006007242 A1 | 12-01-2006 |

EPO FORM P0459

For more details about this annex : see Official Journal of the European Patent Office, No. 12/82

**EP 2 194 468 A1**

**REFERENCES CITED IN THE DESCRIPTION**

**Patent documents cited in the description**

- KR 1020080122622